# FASCICULE DE BREVET EUROPEEN

(11) **EP 1 800 983 B1**
(45) Date de publication et mention de la délivrance du brevet: **20.08.2008**
(21) Numéro de dépôt: 06126784.5
(22) Date de dépôt: 21.12.2006
(51) Int. Cl.: B60T 13/68

(54) **Commande du freinage hydraulique d'une remorque**
Hydraulische Bremssteuerung eines Anhängers
Hydraulic braking system control for a trailer

(30) Priorité: 23.12.2005 FR 0554066
(43) Date de publication de la demande: 27.06.2007
(73) Titulaire: POCLAIN HYDRAULICS INDUSTRIE, 60411 Verberie (FR)
(72) Inventeur: Lucienne, Philippe, 60300 Aumont en Halatte (FR); Raisin, Jean-Philippe, 60270 Gouvieux (FR)
(74) Mandataire: Intes, Didier Gérard André

(56) Documents cités:
- EP-A2- 0 189 077
- FR-A3- 2 661 381

## Description

La présente invention concerne un dispositif de commande du freinage hydraulique d'une remorque attelée à un tracteur, comprenant un circuit hydraulique ayant une conduite de frein apte à être reliée à une source de fluide sous pression ou à un réservoir sans surpression par l'intermédiaire d'un réducteur de pression proportionnel commandé électriquement par une unité de commande électronique.

En général, les composants hydrauliques et électroniques des systèmes de freinage des remorques attelées à un tracteur, notamment un tracteur agricole, sont, au moins pour la plupart, situés sur le tracteur.

Cependant, il existe des remorques de types différents, dont les freinages sont commandés différemment, de sorte que les composants embarqués sur le tracteur doivent tenir compte de ces différences.

Plus précisément, les organes de freinage comprennent les moyens mécaniques, en particulier des garnitures de freinage qui sont sollicitées mécaniquement pour frotter contre le moyeu d'une roue et freiner cette dernière.

Le document FR 2 661 381 divulgue le préambule de la revendication 1.

Pour commander le déplacement des organes mécaniques de freinage, les systèmes de freinage comprennent des moyens hydrauliques de commande, en particulier une chambre destinée à contenir du fluide hydraulique.

Toutefois, selon le type de remorque, la commande du frein est activée de manière différente.

En particulier, il existe des remorques de type italien, dans lesquelles le frein peut être activé en situation de parking (c'est-à-dire au repos) par manque de pression dans une chambre de commande hydraulique, tandis qu'il est désactivé pour permettre la circulation de la remorque lorsqu'une pression moyenne (par exemple entre 8 et 15 bars) est entretenue dans cette chambre, et qu'il est réactivé pour un freinage de service (c'est-à-dire lorsque la remorque circule), lorsque la pression monte à une valeur nettement supérieure (en particulier entre 15 et 140 bars). Le freinage de parking réalise également un freinage de secours, qui est activé naturellement lorsqu'un incident survient.
Il existe également des remorques de type français, comprenant uniquement un freinage de service, qui est commandé par une augmentation de la pression dans une chambre de commande hydraulique. En variante, certaines remorques de type français sont équipées d'un dispositif à accumulation d'énergie pour permettre un freinage de secours en alimentant la chambre de commande.

Avec les systèmes existant, une adaptation spécifique du système de freinage est nécessaire lorsque l'on souhaite atteler au tracteur une remorque de l'un ou l'autre des types indiqués ci-dessus. Ces opérations d'adaptation s'avèrent fastidieuses et coûteuses, et elles nuisent bien entendu à la souplesse d'utilisation du tracteur.

L'invention a pour but de remédier à ces inconvénients, en proposant un dispositif de commande du freinage permettant, à partir du tracteur, d'assurer le freinage d'une remorque de l'un quelconque des types indiqués ci-dessus.

Ce but est atteint grâce au fait que le circuit comprend une conduite de frein supplémentaire en dérivation par rapport à ladite conduite de frein entre un tronçon d'entrée apte à être relié à la source de fluide sous pression et un tronçon de sortie, la conduite de frein et la conduite de frein supplémentaire étant reliées audit tronçon de sortie par des moyens de sélection de la plus haute pression, au fait que le circuit comprend en outre un sélecteur hydraulique disposé sur la conduite de frein supplémentaire et des moyens d'électrovalve de commande commandés par l'unité de commande électronique, les moyens d'électrovalve de commande étant aptes à adopter une première configuration de travail dans laquelle ils relient le tronçon d'entrée à une première chambre de commande du sélecteur pour commander ce dernier dans une première position dans laquelle l'entrée et la sortie du sélecteur sont isolées par le sélecteur, une deuxième configuration de travail dans laquelle ils relient le tronçon d'entrée à une deuxième chambre de commande du sélecteur pour commander ce dernier dans une deuxième position dans laquelle l'entrée et la sortie du sélecteur sont reliées ensemble, et une configuration neutre dans laquelle l'entrée du sélecteur est reliée audit tronçon d'entrée et dans laquelle aucune des deux chambres de commande n'est reliée au tronçon d'entrée, au fait qu'il comprend des moyens pour maintenir le sélecteur en position lorsque les moyens d'électrovalve de commande passent de leur première ou de leur deuxième configuration de travail à leur configuration neutre, et au fait qu'il comprend des moyens pour fournir à l'unité de commande électronique une information indiquant si le frein de la remorque est d'un premier type nécessitant un défreinage par une alimentation en fluide ou d'un deuxième type, l'unité de commande prenant cette information en compte pour la commande des moyens d'électrovalve de commande.

Comme on le verra dans la suite, les moyens d'électrovalve de commande sont commandés par l'unité de commande dans l'une ou l'autre de leurs configurations de travail pour mettre le sélecteur dans une position qui correspond à un type de remorque attelée. En fonctionnement normal, le réducteur de pression proportionnel assure le freinage de service de la remorque, qu'elle soit du premier type précité, c'est-à-dire de type italien nécessitant une alimentation en fluide pour assurer un défreinage nécessaire à la circulation de la remorque, ou bien d'un autre type, dans lequel une alimentation en fluide provoque au contraire un freinage. En l'absence d'alimentation électrique, les moyens d'électrovalve de commande sont dans leur configuration neutre et le sélecteur reste dans sa position pour assurer un freinage d'urgence adapté au type de remorque attelée.

Selon la commande des moyens d'électrovalve de commande, la pression la plus élevée peut être soit dans la conduite de frein, soit dans la conduite de frein supplémentaire, et c'est celle de ses conduites qui est à la plus haute pression qui assure l'alimentation en fluide du tronçon de sortie, lequel est relié à la chambre hydraulique de commande du frein.

Avantageusement, le sélecteur comprend une voie auxiliaire qui est reliée au réservoir, la sortie étant reliée à la voie auxiliaire en étant isolée de l'entrée dans la première position du sélecteur, tandis que l'entrée et la sortie sont reliées en étant isolées de la voie auxiliaire dans la deuxième position du sélecteur.

Ceci permet d'éviter une pression résiduelle dans la conduite de frein supplémentaire lorsque le sélecteur est dans sa première position.

Avantageusement, dans la configuration neutre des moyens d'électrovalve de commande, les deux chambres de commande du sélecteur sont mises sensiblement à la même pression.

Ceci permet de limiter les contraintes auxquelles sont soumis les moyens qui servent à maintenir le sélecteur en position lors du retour des moyens d'électrovalve de commande en position neutre.

Par exemple, les moyens d'électrovalve de commande comprennent deux électrovalves à deux positions ou une électrovalve susceptible d'occuper trois positions.

Avantageusement, les moyens de sélection de la plus haute pression comprennent un clapet-navette disposé à la jonction entre la conduite de frein, la conduite de frein supplémentaire et le tronçon de sortie.

Avantageusement, le tronçon de sortie est relié au réservoir par un limiteur de pression.

Ce limiteur de pression permet de protéger le circuit de freinage en limitant la pression dans la conduite de frein.

L'invention sera bien comprise et ses avantages apparaîtront mieux à la lecture de la description qui suit, de modes de réalisation représentés à titre d'exemple non limitatifs. La description se réfère aux dessins annexés sur lesquels :
- la figure 1 montre schématiquement un dispositif conforme à l'invention selon un premier mode de réalisation ;
- la figure 2 est une vue analogue à la figure 1, pour un deuxième mode de réalisation ; et
- les figures 3 et 4 montrent la conformation d'un sélecteur pouvant faire partie du dispositif de commande de l'invention, dans deux positions de ce dernier.

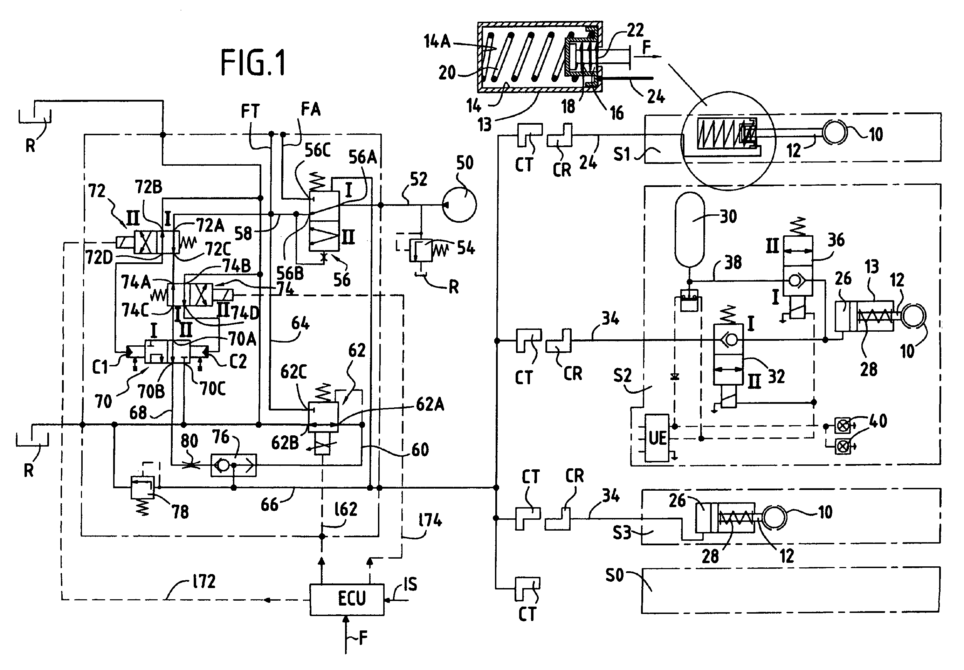

On décrit tout d'abord la partie droite de la figure 1 qui illustre trois exemples possibles de systèmes de freinage de remorque S1, S2, S3 et montre une situation S0 dans laquelle aucune remorque n'est attelée au tracteur.

Le système S1 est de type italien. Il comprend des organes de freinage mécanique, par exemple des garnitures de frein 10 qui doivent être écartés contre la périphérique interne d'un moyeu pour assurer le freinage. Ils sont commandés par un système de vérin hydraulique comprenant un piston 12 mobile dans un cylindre 13, et une commande hydraulique qui, comme on le voit mieux sur l'agrandissement, comprend une enceinte principale 14 et une enceinte secondaire 16. L'enceinte secondaire 16 est délimitée, dans l'enceinte principale, par une coupelle mobile 18 qui est rappelée en permanence dans le sens du freinage par un ressort de rappel principal 20. La tige du piston 12 est rappelée en permanence vers le fond de la coupelle par un ressort secondaire 22. Une conduite hydraulique 24 est reliée à l'enceinte principale 14. On comprend que lorsque cette conduite n'est pas alimentée en fluide, le vérin est dans la position représentée sur la figure 1, dans laquelle le ressort 20 repousse le piston, de sorte que le freinage est actif, en situation de frein de parking. Pour réaliser un défreinage, c'est-à-dire pour désactiver ce frein de parking afin de permettre une circulation de la remorque, l'enceinte principale doit être alimentée en fluide sous pression par la conduite 24. Pour une pression donnée correspondant au tarage du ressort 20 (par exemple de l'ordre de 8 à 15 bars), la coupelle 18 est repoussée vers le fond 14A de l'enceinte principale à l'encontre de l'effort de rappel du ressort 20, ce qui permet le déplacement du piston 12 nécessaire au défreinage. Lorsque, à partir de cette situation, un freinage de service est nécessaire, on augmente encore la pression d'alimentation de la conduite 24, et cette pression augmentée permet d'écarter la tige de piston 12 du fond de la coupelle 18 à l'encontre de l'effort de rappel du ressort secondaire 22, ce qui sollicite les organes mécaniques de freinage vers leur position de freinage. Si l'alimentation de fluide de freinage cesse, on réalise automatiquement un freinage de secours, puisque la situation redevient celle d'un frein de parking. On comprend donc que ce type de remorque nécessite :
- une absence de pression dans la conduite 24 pour permettre l'activation du frein de parking ou de secours ;
- une pression moyenne dans cette conduite pour permettre un défreinage ;
- une pression augmentée dans cette conduite pour permettre l'activation du frein de service.

Le système S2 comprend des organes mécaniques de freinage 10 et 12, par exemple du même type que ceux du système S1. Le piston 12 est mobile dans un cylindre 13, et le freinage est provoqué par alimentation en fluide d'une chambre de freinage 26 située d'un côté du piston, à l'encontre de l'effort de rappel exercé par un ressort de rappel 28, par exemple situé de l'autre côté. Le système de freinage S2 est de type français, à accumulation. Il comprend en effet un accumulateur 30 qui permet une activation en frein de secours. Le système de freinage équipant la remorque de type S2 comprend en outre une électrovalve 32 interposée sur la conduite de freinage 34 reliée à la chambre hydraulique 26, et une électrovalve 36 disposée sur la dérivation 38 qui relie l'accumulateur 30 à la conduite 34, en aval de l'électrovalve 32. Ces électrovalves sont commandées par une unité électrique UE, qui commande également les feux de stop 40 de la remorque.

Pour réaliser un premier freinage après une mise en circulation de la remorque, l'électrovalve 32 est dans sa position inactive I (qui est celle de la figure 1), et le fluide hydraulique circule dans la conduite 34 seulement dans le sens du remplissage de la chambre de freinage 26, lequel remplissage provoque le freinage. Lors de ce remplissage de la chambre 26, l'électrovalve 36 étant dans sa position commandée I représentée sur la figure 1, le fluide peut circuler de la conduite 34 vers l'accumulateur 30 à travers l'électrovalve 36, sans pouvoir revenir en sens inverse vers la chambre 26. L'accumulateur est donc rempli de fluide à l'occasion du premier freinage.

Pour désactiver le freinage, il suffit de commander la valve 32 dans sa position II en permettant ainsi l'évacuation de la chambre 26.

Pour un freinage de secours, les électrovalves 32 et 36 cessent d'être alimentées, de sorte que l'électrovalve 32 est dans sa position I, tandis que l'électrovalve 36 parvient dans sa position II. Ainsi, le fluide contenu dans l'accumulateur 30 peut circuler vers la chambre 26 pour provoquer le freinage, et le fluide n'est pas évacué de cette chambre puisque la valve 32 est dans sa position I.

Le système S3 est celui d'une remorque de type français, sans accumulation, les organes de frein 10, 12 étant du même type que ceux précédemment évoqués, et le freinage étant réalisé par alimentation en fluide d'une chambre hydraulique 26 par la conduite de frein 34, pour provoquer un déplacement du piston de frein à l'encontre de l'effort de rappel d'un ressort 28.

Classiquement, les remorques sont attelées au tracteur par l'intermédiaire de coupleurs comprenant un coupleur CT qui est solidaire du tracteur et un coupleur CR qui est solidaire de la remorque. Ces coupleurs permettent à la fois une connexion électrique et une connexion hydraulique.

Dans la situation S0, aucune remorque n'est attelée et le coupleur CT n'est pas connecté.

On décrit maintenant la partie gauche de la figure 1 qui présente le dispositif de commande du freinage selon l'invention. Ce dispositif comprend une pompe hydraulique 50, en particulier une pompe dite de type "load sensing" dont le débit est régulé pour éviter les variations de débit sous l'effet de variation de charge de la pompe. Cette pompe alimente une conduite principale 52, dans laquelle le débit est limité par un limiteur de pression 54.

La conduite 52 permet d'alimenter le circuit de frein. Toutefois, il peut être souhaitable que la pompe 50 soit également utilisée pour commander les fonctions auxiliaires du tracteur, par exemple la suspension de ce dernier, des vérins de relevage de sa flèche, l'entraînement hydraulique d'un outil, ou encore des options diverses. Pour cette raison, une valve de priorité 56 est disposée sur la conduite 52. Cette valve sert à permettre d'assurer les fonctions auxiliaires, tout en permettant, en priorité, d'assurer le freinage qui est une fonction de sécurité. Ainsi, la valve 56 est susceptible d'occuper deux positions, une position I qui est celle de la figure 1, dans laquelle son entrée 56A est seulement reliée à sa première sortie 56B à laquelle est raccordé le tronçon d'entrée 58 du circuit de freinage. Si le débit dans la conduite 52 est suffisant, la valve 56 peut occuper sa position II, dans laquelle son entrée 56A est également reliée à sa deuxième sortie 56C, permettant, par une conduite FA, l'alimentation de dispositifs hydrauliques nécessaires à l'accomplissement des fonctions auxiliaires.

Le tronçon d'entrée 58 est relié à une conduite FT, qui sert à l'alimentation nécessaire au freinage du tracteur, le système de freinage du tracteur n'étant pas représenté.

Pour le freinage de la remorque, le circuit comprend une conduite frein 60 qui, selon la position d'un réducteur de pression proportionnel 62, peut être reliée soit au tronçon d'entrée 58 (par un tronçon de liaison 64), soit à un réservoir sans surpression R. Le circuit de freinage comprend un tronçon de sortie 66 qui, comme on le voit sur la partie droite de la figure 1, est relié au coupleur de tracteur CT pour permettre la commande hydraulique du frein de la remorque.

Le circuit comprend également une conduite de frein supplémentaire 68 qui est disposé en dérivation par rapport à la conduite 60, entre le tronçon d'entrée 58 et le tronçon de sortie 66. Un sélecteur hydraulique 70 est disposé sur la conduite de frein supplémentaire 68. Le circuit comprend également des moyens d'électrovalve de commande qui permettent de commander le déplacement du sélecteur et le raccordement de la conduite de frein supplémentaire au tronçon d'entrée 58.

Dans l'exemple représenté sur la figure 1, ces moyens d'électrovalve de commande comprennent deux électrovalves à deux positions, respectivement 72 et 74. La première électrovalve 72 présente une première voie 72A reliée au tronçon d'entrée 58, une deuxième voie 72B reliée au réservoir R, et une troisième voie 72C reliée à la première voie 74A de la deuxième électrovalve 74 et une quatrième voie 72D reliée à la première chambre de commande C1 du sélecteur 70. La deuxième électrovalve 74, comprend, la première voie 74A qui est reliée à la troisième voie 72C de la première électrovalve 72, une deuxième voie 74B qui est reliée au réservoir R, une troisième voie 74C qui est reliée à l'entrée 70A du sélecteur 70 et une quatrième voie 74D qui est reliée à la deuxième chambre de commande C2 du sélecteur 70.

La première électrovalve 72 peut occuper une première position I, dans laquelle ses première et troisième voies 72A, 72C sont reliées entre elles, tandis que ses deuxième et quatrième voies 72B, 72D sont également reliées entre elles en étant isolées des première et troisième voies. Elle peut également occuper une deuxième position II, dans laquelle les connexions sont inversées, les première et quatrième voies 72A, 72D étant reliées entre elles et les deuxième et troisième voies 72B, 72C étant également reliées entre elles en étant isolées des première et quatrième voies.

De même, la deuxième électrovalve 74 peut occuper une première position I dans laquelle ses première et troisième voies 74A, 74C sont reliées entre elles en étant isolées des deuxième et quatrième voies 74B, 74D qui sont reliées entre elles, et une deuxième position II dans laquelle la connexion est inversée, les première et quatrième voies étant reliées entre elles et les deuxième et troisième voies étant reliées entre elles.

La conduite de frein 60 et la conduite de frein supplémentaire 68 sont raccordées au tronçon de sortie 66 par l'intermédiaire d'un clapet-navette 76 qui sert à sélectionner la plus haute pression, c'est-à-dire qu'il raccorde hydrauliquement celle des conduites 60 et 68 dans laquelle la pression est la plus élevée au tronçon de sortie 66.

Les électrovalves sont commandées par une unité de contrôle électronique ECU (Electronic Control Unit). Plus précisément, l'unité ECU commande respectivement le réducteur de pression 62, la première électrovalve 72 et la deuxième électrovalve 74 par des lignes de commande 162, 172 et 174. Ces lignes sont des connexions de commande, qui servent à transporter des signaux électriques, mais elles peuvent être avec ou sans câble. L'unité ECU reçoit des signaux d'information, respectivement une information IS relative au type de système de freinage de la remorque attelée au tracteur et une information F de commande du freinage.

L'information IS peut être une information donnée par l'opérateur du tracteur sur un élément rapporté dans la cabine du tracteur, par exemple un interrupteur du tableau de bord. De manière préférentielle, cette information IS peut être transmise directement par le coupleur CR de la remorque sur le tracteur. Dans ce cas, le coupleur de remorque CR comporte une forme ou tout autre élément spécifique au type de remorque, et le coupleur CT qui est lié au tracteur comporte un capteur ou analogue permettant de détecter cette forme ou cet autre élément spécifique, relatif au type de remorque. Dans ce cas, ce coupleur peut émettre l'information IS directement. Dans ce cas, en l'absence de connexion avec une remorque comme dans la situation S0, l'information IS transmise par le coupleur de tracteur CT peut indiquer l'absence de la remorque. Il est rappelé que les coupleurs sont à la fois des coupleurs électriques et hydrauliques.

S'agissant de l'information F, le freinage est activé de manière classique, en particulier par enfoncement d'une pédale ou d'un levier de commande. L'information du niveau de freinage peut être fonction du niveau d'enfoncement de cette pédale ou de ce levier, de la pression du fluide dans le circuit de freinage ou de tout autre moyen approprié. L'information F tient compte de ce niveau de freinage et, pour le freinage de service à l'aide du réducteur de pression 62, l'unité électronique ECU émet un signal de commande qui dépend du niveau de freinage souhaité.

Le sélecteur 70 peut occuper une première position I dans laquelle l'entrée 70A et la sortie 70B de ce sélecteur sont isolées, et une deuxième position II dans laquelle l'entrée et la sortie du sélecteur sont au contraire reliées ensemble. En l'espèce, en plus de son entrée et de sa sortie, le sélecteur 70 comprend une voie auxiliaire 70C qui est reliée au réservoir R. On voit que, dans la première position I du sélecteur, la sortie 70B et la voie auxiliaire 70C sont reliées en étant isolées de l'entrée.

Le circuit de freinage comprend un limiteur de pression 78 qui permet de limiter la pression dans le circuit de freinage à une pression maximale admissible par le frein. Ce limiteur est formé par une soupape qui est interposée entre le tronçon de sortie 66 du circuit de freinage et le réservoir R. Le limiteur de pression est donc disposé en aval du clapet-navette, endroit où il protège en permanence le circuit de freinage, même en cas de défaillance du réducteur de pression 62.

Une restriction 80 est disposée sur la conduite de frein supplémentaire 68, entre le sélecteur 70 et le clapet-navette 76. Elle permet de limiter le débit de fluide à travers le limiteur de pression 78. Elle génère donc une perte de charge dans le circuit de freinage, ce qui permet, même lors d'une activation du freinage, de maintenir dans la conduite FA une pression nécessaire au maintien des fonctions auxiliaires si la valve de priorité 56 est restée dans sa position II.

On décrit maintenant le fonctionnement du circuit.

Lorsque l'information IS entrée à l'unité ECU indique que le système de freinage de la remorque est du type S1 décrit précédemment, (remorque de type italien), l'unité ECU commande la première électrovalve 72 dans sa deuxième position II, alors que la deuxième électrovalve 74 reste dans sa première position I qu'elle occupe en l'absence de stimulation électrique. Cette situation est une première configuration de travail. On voit que, dans ce cas, le tronçon d'entrée 58 est relié à la première chambre de commande C1 du sélecteur 70, ce qui a pour effet de commander ce dernier dans sa première position I. L'entrée 70A et la sortie 70B du sélecteur sont donc isolées. En même temps, l'entrée 70A est reliée au réservoir R puisque, l'électrovalve 74 étant dans sa position I, cette entrée communique avec la troisième voie 72C de la première électrovalve 72 qui est elle-même reliée à la deuxième voie 72B de cette électrovalve qui est dans sa position II. Ainsi, aucune pression n'est en attente dans la conduite de frein supplémentaire 68 d'autant que, dans l'exemple représenté, cette conduite est alors reliée au réservoir en raison de l'existence de la voie auxiliaire 70C du sélecteur. Dans cette première configuration de travail, le freinage de la remorque est commandé de manière classique par le réducteur de pression proportionnel 62 disposé sur la conduite de frein 60. En l'occurrence, lorsque le réducteur ne reçoit aucun signal de commande par la ligne 162, son entrée 62A reliée à la conduite de frein 60 est raccordée à sa sortie 62B qui est reliée au réservoir, c'est-à-dire qu'aucune pression de freinage ne règne dans la conduite de frein 60. Dans ce cas, la position du clapet-navette 76 est indifférente, mais aucune pression n'alimente la conduite 24 du système de freinage de la remorque et celui-ci est en situation de frein de parking. Pour permettre une circulation du tracteur avec la remorque défreinée, la position du réducteur 62 est régulée entre la position précitée et une position dans laquelle son entrée 62A est raccordée à sa sortie 62C qui est reliée au tronçon d'entrée 58, de manière à faire régner dans la conduite 60 une pression de l'ordre de 8 à 15 bars. Cette pression étant supérieure à celle qui règne dans la conduite 68, le clapet-navette 76 relie la conduite 60 au tronçon de sortie 66, ce qui permet l'alimentation de la conduite 24 à une pression de 8 à 15 bars, nécessaire au défreinage du système de frein S1. Pour réaliser un freinage de service, la position du réducteur 62 est régulée de telle sorte que la pression dans la conduite 60 augmente et atteigne une valeur qui peut aller jusqu'à environ 140 bars, pression à laquelle est alimentée la conduite 24 par la liaison de la conduite 60 à la conduite 66. Si une rupture électrique survient, par exemple en raison d'un désaccouplement électrique des coupleurs qui relient le tracteur et la remorque, le réducteur de pression 62 est rappelé automatiquement vers sa position de repos, dans laquelle son entrée 62A est reliée à sa sortie 62B, c'est-à-dire que la conduite 60 est reliée au réservoir R et est donc sans surpression. L'électrovalve 74 reste dans sa position I qui est sa position de repos et l'électrovalve 72 revient dans sa position I qui est également sa position de repos. En d'autres termes, les moyens d'électrovalve formés par les électrovalves 72 et 74 sont dans leur position neutre.

Le sélecteur est équipé de moyens qui permettent, lors d'un tel retour en position neutre des moyens d'électrovalve de commande, de les maintenir dans la position qu'il avait avant son retour en position neutre. En conséquence, le sélecteur 70 reste dans sa position I dans les circonstances qui viennent d'être décrites. Il en résulte que la conduite de frein 60 et la conduite de frein supplémentaire 68 sont toutes deux reliées au réservoir R et que la position du clapet-navette 76 est indifférente. Aucune pression n'est donc générée dans la conduite 24 et le frein S1 revient dans sa position de frein de parking. Ainsi, la défaillance électrique, a provoqué un freinage d'urgence.

Lorsque l'information IS qui est entrée à l'unité de commande ECU indique que le système de freinage est de type S2 ou S3, l'unité ECU laisse l'électrovalve 72 dans sa position de repos I, mais elle commande l'électrovalve 74 dans sa position II. Ainsi, les électrovalves 72 et 74 sont dans leur deuxième configuration de travail. Dans cette situation, la deuxième chambre de commande C2 du sélecteur 70 est reliée au tronçon d'entrée 58, et le sélecteur est donc commandé dans sa position II, dans laquelle son entrée 70A est reliée à sa sortie 70B. Toutefois, dans la mesure où la deuxième électrovalve 74 est dans sa position II, l'entrée 70A du sélecteur est reliée au réservoir R par la connexion entre les deuxième et troisième voies de l'électrovalve 74. Ainsi, aucune surpression ne règne dans la conduite de frein supplémentaire 68, et le système de frein est commandé normalement par le réducteur de pression 62 disposé sur la conduite de frein 60. Ainsi, pour ne pas freiner, ce réducteur reste dans sa position de repos en reliant la conduite 60 au réservoir R tandis que, pour commander un freinage, il est déplacé en étant régulé pour faire régner dans la conduite 60 la pression adaptée. Le clapet-navette 76 sélectionne alors le raccordement de la conduite 60 au tronçon de sortie 66 puisque la pression dans la conduite 60 est supérieure à celle qui règne dans la conduite 68.

En cas de défaillance électrique, le réducteur de pression 62 revient dans sa position de repos et relie la conduite 60 au réservoir R. De son côté, la deuxième électrovalve 74 revient dans sa position I. Le sélecteur 70 reste quant à lui dans sa position II dans laquelle il est maintenu par les moyens de maintien en position. Dans ces circonstances, la conduite de frein supplémentaire 68 est reliée au tronçon d'entrée 58 par la communication entre l'entrée 70A et la sortie 70B du sélecteur, les première et troisième voies 74A, 74C de la valve 74 et les première et troisième voies 72A, 72C de la valve 72. La pression dans la conduite 68 est alors supérieure à celle qui règne dans la conduite 60, et le clapet-navette 76 raccorde donc la conduite 68 au tronçon de sortie 66, ce qui permet de générer, dans la conduite 34 du système de freinage, une pression permettant le freinage.

Cette fois encore, la défaillance électrique a permis un freinage d'urgence.

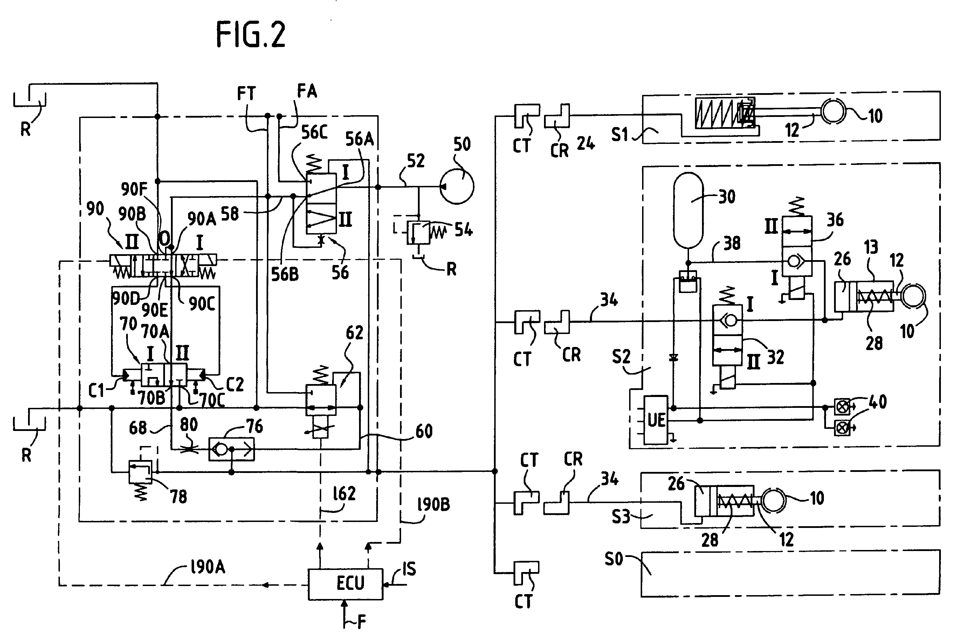

On décrit maintenant la figure 2, qui est analogue à la figure 1 sauf en ce qui concerne les moyens d'électrovalve de commande. En effet, les deux électrovalves 72 et 74 de la figure 1 sont remplacées par une électrovalve 90 susceptible d'occuper trois positions. Cette électrovalve présente une première voie 90A reliée au tronçon d'entrée 58, une deuxième voie 90B reliée au réservoir R, une troisième voie 90C reliée à l'entrée 70A du sélecteur, une quatrième voie 90D reliée à la première chambre de commande C1 du sélecteur, et une cinquième voie 90E reliée à la deuxième chambre de commande C2 du sélecteur. En l'occurrence, ce sélecteur est du type à six voies, sa sixième voie 90 étant reliée en permanence à l'une des autres voies, en l'espèce la première voie 90A.

L'unité de contrôle électronique ECU commande le réducteur de pression 62 par une ligne I62, et l'électrovalve 90 à trois positions par deux lignes de commande, respectivement I90A et I90B. Elle reçoit également une information relative au type de système de freinage IS, et une information de freinage F. Le fonctionnement est analogue à celui de la figure 1, étant entendu que la configuration neutre de l'électrovalve 90, qu'elle adopte sans commande électrique, est sa position centrale 0, dans laquelle la première voie 90A est reliée à la troisième voie 90C, tandis que la deuxième voie 90B est isolée des quatrième et cinquième voies, 90D et 90E. En l'espèce, les voies 90D et 90E sont également isolées.

La première configuration de travail est la position I de l'électrovalve 90, dans laquelle les première et quatrième voies 90A et 90D sont reliées entre elles (en l'occurrence, elles le sont par la liaison permanente entre la sixième voie 90F et la première voie 90A), et les deuxième et cinquième voies 90B et 90E sont reliées entre elles en étant isolées des première et quatrième voies, tandis que la troisième voie 90C est isolée.

La deuxième configuration de travail est la position II de l'électrovalve 90, dans laquelle les première et cinquième voies, 90A, 90E sont reliées, les deuxième et quatrième voies, 90B, 90D sont reliées en étant isolées des première et cinquième voies, et la troisième voie 90C est isolée. Le fonctionnement est similaire à celui qui a été décrit précédemment. En effet, lorsqu'un système de freinage de type S1 est détecté, l'unité ECU commande le sélecteur 90 dans sa première configuration de travail I, ce qui provoque le déplacement du sélecteur 70 dans sa position I, dans laquelle son entrée est isolée de sa sortie. Le système de freinage S1 peut donc être commandé naturellement par le réducteur de pression 62, lui-même contrôlé par l'unité ECU. En cas de défaillance, ce réducteur revient en position neutre, de sorte que la conduite de frein 60 est reliée au réservoir, mais le sélecteur 70 reste dans sa position I. L'électrovalve 90 revient quant à elle dans sa position 0 centrale mais, la première voie 70A du sélecteur étant isolée de sa sortie, aucune pression n'alimente la conduite de frein supplémentaire 68 et le système de frein de type italien revient naturellement en situation de freinage qui est sa configuration de repos.

Lorsque, au contraire, c'est un système de type S2 ou S3 qui est détecté, l'unité ECU commande l'électrovalve 90 dans sa deuxième configuration de travail II. C'est alors la chambre C2 du sélecteur 70 qui est alimenté en fluide, et le sélecteur passe dans sa position II. Toutefois, l'électrovalve 90 étant dans sa position II, l'entrée du sélecteur 70 est reliée au réservoir R et aucune surpression ne règne dans la conduite de frein supplémentaire 68, de sorte que le frein est commandé normalement par le réducteur de pression 62 et la conduite de frein 60. En cas de défaillance électrique, ce réducteur revient dans sa position de repos et la conduite 60 est reliée au réservoir mais l'électrovalve 90 revient dans sa position 0, dans laquelle la conduite de frein supplémentaire 68 est reliée au tronçon d'entrée 58 par la liaison entre les première et troisième voies 90A et 90C de l'électrovalve 90. Le frein de secours est alors activé par le fluide provenant de la conduite de frein supplémentaire.

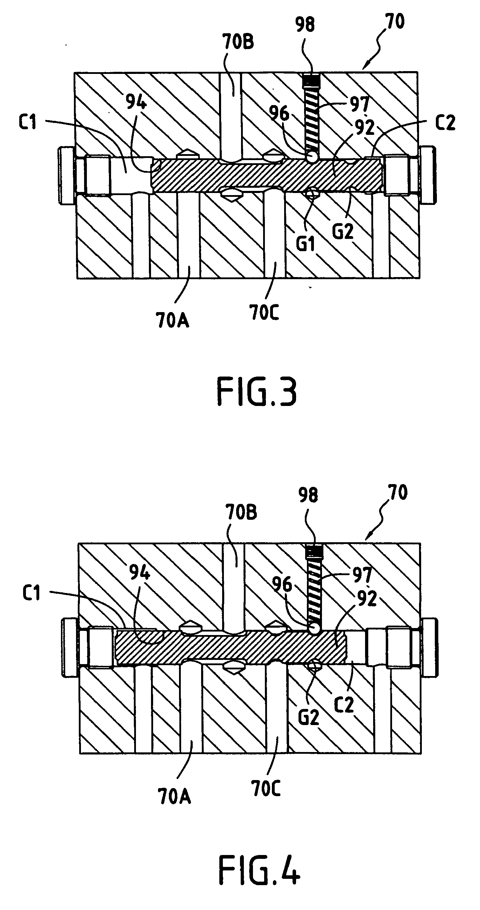

En référence aux figures 3 et 4, on décrit maintenant les moyens qui permettent de maintenir le sélecteur 70 en position lorsqu'il cesse d'être sollicité par l'alimentation de l'une de ses chambres de commande C1 et C2. On voit que ce sélecteur comprend un tiroir 92 qui est mobile dans un alésage 94. Dans cet alésage débouchent les diverses voies du sélecteur 70, à savoir son entrée 70A, sa sortie 70B et sa voie auxiliaire 70C.

Sur la figure 3, le sélecteur est dans sa position I, sa sortie 70B étant reliée à la voie auxiliaire 70C tandis que son entrée 70A est isolée. Sur la figure 4, le sélecteur est représenté dans sa position II, l'entrée 70A étant reliée à sa sortie 70B tandis que la voie auxiliaire 70C est isolée.

Les moyens pour maintenir le sélecteur en position comprennent les moyens élastiques solidaires de l'alésage 94, qui sont rappelés en permanence vers une position de maintien dans laquelle, lorsqu'ils se trouvent en regard d'une gorge du tiroir, ils font saillie dans cette gorge. En l'espèce, ces moyens élastiques comprennent une bille 96 rappelée en permanence contre la paroi du tiroir 92 par un ressort 97 disposé dans un alésage perpendiculaire à l'alésage 94 et bouché par un bouchon 98 du côté opposé à l'alésage 94. Le tiroir présente deux gorges, respectivement G1 et G2. Sur la figure 3, la bille 96 pénètre dans la gorge G1, ce qui tend à maintenir le tiroir 92 dans sa position I même lorsque la pression dans la chambre C1 diminue lors d'un retour des moyens d'électrovalve de commande à leur position neutre. Sur la figure 4, la bille 96 est en contact avec le fond de la gorge G2, ce qui tend à maintenir le tiroir dans sa position II même si la pression dans la chambre C2 diminue lors d'un retour des moyens d'électrovalve de commande à leur position neutre.

Bien entendu, on pourrait inverser ces moyens de maintien en position, en prévoyant que les moyens élastiques soient solidaires du tiroir et que, lorsqu'ils se trouvent en regard d'une gorge de l'alésage, ils fassent saillie dans cette gorge. Par exemple, dans ce cas, ces moyens élastiques pourraient être du type d'un circlips ayant tendance à adopter naturellement une configuration radialement expansée.

Dans l'exemple représenté sur la figure 1, les deux chambres de commande C1 et C2 du sélecteur sont mises sensiblement à la même pression en configuration neutre des moyens d'électrovalve de commande, c'est-à-dire lorsque les électrovalves 72 et 74 sont dans leurs positions I. En l'occurrence, cette même pression est sensiblement la pression atmosphérique puisque, dans cette configuration, les chambres de commande C1 et C2 sont reliées au réservoir R. Ce n'est pas le cas dans l'exemple représenté sur la figure 2, de sorte que, lors d'un retour de l'électrovalve 90 à sa position 0, celle des chambres C1 et C2 qui était reliée au tronçon d'entrée, reste à une pression supérieure à celle qui règne dans l'autre chambre, ce qui facilite le maintien de l'électrovalve en position. Si l'électrovalve est maintenue durablement dans sa position 0, la pression dans les chambres de commande C1 et C2 tend à se rapprocher en raison des fuites. En variante, on peut prévoir que les voies 90D et 90E soient reliées dans la position 0, pour raccorder et mettre les deux chambres de commande à la même pression. Elles peuvent alors être reliées à la voie 90B pour que cette pression soit celle du réservoir.

## Revendications

1. Dispositif de commande du freinage hydraulique d'une remorque attelée à un tracteur, comprenant un circuit hydraulique ayant une conduite de frein (60) apte à être reliée à une source de fluide sous pression (50) ou à un réservoir sans surpression (R) par l'intermédiaire d'un réducteur de pression proportionnel (62) commandé électriquement par une unité de commande électronique (ECU),
**caractérisé en ce que** le circuit comprend une conduite de frein supplémentaire (68) en dérivation par rapport à ladite conduite de frein (60) entre un tronçon d'entrée (58) apte à être relié à la source de fluide sous pression (50) et un tronçon de sortie (66), la conduite de frein et la conduite de frein supplémentaire (68) étant reliées audit tronçon de sortie par des moyens (76) de sélection de la plus haute pression, **en ce que** le circuit comprend en outre un sélecteur hydraulique (70) disposé sur la conduite de frein supplémentaire (68) et des moyens d'électrovalve de commande (72, 74 ; 90) commandés par l'unité de commande électronique (ECU), les moyens d'électrovalve de commande étant aptes à adopter une première configuration de travail (72 en II, 74 en I, 90 en I) dans laquelle ils relient le tronçon d'entrée (58) à une première chambre de commande (C1) du sélecteur (70) pour commander ce dernier dans une première position (I) dans laquelle l'entrée (70A) et la sortie (70B) du sélecteur (70) sont isolées par le sélecteur, une deuxième configuration de travail (72 en I, 74 en II, 90 en II) dans laquelle ils relient le tronçon d'entrée (58) à une deuxième chambre de commande (C2) du sélecteur (70) pour commander ce dernier dans une deuxième position (II) dans laquelle l'entrée et la sortie du sélecteur (70A, 70B) sont reliées ensemble, et une configuration neutre (72 en I, 74 en I, 90 en 0) dans laquelle l'entrée (70A) du sélecteur (70) est reliée audit tronçon d'entrée (58) et dans laquelle aucune des deux chambres de commande (C1, C2) n'est reliée au tronçon d'entrée (58), **en ce qu'**il comprend des moyens (96, 97, G1, G2) pour maintenir le sélecteur (70) en position lorsque les moyens d'électrovalve de commande (72, 74 ; 90) passent de leur première ou de leur deuxième configuration de travail à leur configuration neutre, et **en ce qu'**il comprend des moyens pour fournir à l'unité de commande électronique (ECU) une information (IS) indiquant si le frein de la remorque est d'un premier type (S1) nécessitant un défreinage par une alimentation en fluide (24) ou d'un deuxième type (S2, S3), l'unité de commande (ECU) prenant cette information en compte pour la commande des moyens d'électrovalve de commande (72, 74 ; 90).

2. Dispositif selon la revendication 1, **caractérisé en ce que** le sélecteur (70) comprend une voie auxiliaire (70C) qui est reliée au réservoir (R), la sortie (70B) étant reliée à la voie auxiliaire (70C) en étant isolée de l'entrée (70A) dans la première position (I) du sélecteur (70), tandis que l'entrée (70A) et la sortie (70B) sont reliées en étant isolées de la voie auxiliaire (70C) dans la deuxième position (II) du sélecteur.

3. Dispositif selon la revendication 1 ou 2, **caractérisé en ce que**, dans la configuration neutre des moyens d'électrovalve de commande (72, 74), les deux chambres de commande (C1, C2) du sélecteur (70) sont mises sensiblement à la même pression.

4. Dispositif selon l'une quelconque des revendications 1 à 3, **caractérisé en ce que** les moyens d'électrovalve de commande comprennent deux électrovalves à deux positions (72, 74).

5. Dispositif selon la revendication 4, **caractérisé en ce que** la première électrovalve (72) présente une première voie (72A) reliée au tronçon d'entrée (58), une deuxième voie (72B) reliée au réservoir (R), une troisième voie (72C) reliée à la première voie (74A) de la deuxième électrovalve (74) et une quatrième voie (72D) reliée à la première chambre de commande (C1) du sélecteur (70), et **en ce que** la deuxième électrovalve (74) comprend, en outre, une deuxième voie (74B) reliée au réservoir (R), une troisième voie (74C) reliée à l'entrée (70A) du sélecteur (70) et une quatrième voie (74D) reliée à la deuxième chambre de commande (C2) du sélecteur (70), et **en ce que** les première et troisième voies (72A, 72C ; 74A, 74C) d'une part et les deuxième et quatrième voies (72A, 72D ; 74B, 74D) d'autre part, de chacune desdites électrovalves (72, 74) sont reliées entre elles dans les premières positions des électrovalves, tandis que, dans les deuxièmes positions de ces dernières, les première et quatrième voies (72A, 72D ; 74A, 74D) d'une part et les deuxième et troisième voies (72B, 72C ; 74B, 74D) d'autre part, de chacune des électrovalves sont reliées.

6. Dispositif selon l'une quelconque des revendications 1 à 3, **caractérisé en ce que** les moyens d'électrovalve de commande comprennent une électrovalve (90) susceptible d'occuper trois positions (0, I, II).

7. Dispositif selon la revendication 6, **caractérisé en ce que** l'électrovalve (90) présente une première voie (90A) reliée au tronçon d'entrée (58), une deuxième voie (90B) reliée au réservoir (R), une troisième voie (90C) reliée à l'entrée (70A) du sélecteur (70), une quatrième voie (90D) reliée à la première chambre (C1) du sélecteur de commande (70) et une cinquième voie (90E) reliée à la deuxième chambre de commande (C2) du sélecteur (70), et **en ce que**, dans une position 0 de l'électrovalve (90), les première et troisième voies (90A, 90C) sont reliées tandis que la deuxième voie (90B) est isolée des quatrième et cinquième voies (90D, 90E), dans une position I de l'électrovalve (90), les première et quatrième voies (90A, 90D) sont reliées entre elles et les deuxième et cinquième voies (90B, 90E) sont reliées entre elles tandis que la troisième voie (90C) est isolée et, dans une position II de l'électrovalve, les première et cinquième voies (90A, 90E) sont reliées et les deuxième et quatrième voies (90B, 90D) sont reliées, tandis que la troisième voie (90C) est isolée.

8. Dispositif selon l'une quelconque des revendications 1 à 7, **caractérisé en ce que** les moyens de sélection de la plus haute pression comprennent un clapet-navette (76) disposé à la jonction entre la conduite de frein (60), la conduite de frein supplémentaire (68) et le tronçon de sortie (66).

9. Dispositif selon l'une quelconque des revendications 1 à 8, **caractérisé en ce que** le tronçon de sortie (66) est relié au réservoir (R) par un limiteur de pression (78).

10. Dispositif selon l'une quelconque des revendications 1 à 9, **caractérisé en ce que** le sélecteur (70) comprend un tiroir (92) mobile dans un alésage (94) et **en ce que** les moyens pour maintenir le sélecteur en position comprennent des moyens élastiques (96, 97) solidaires du tiroir, respectivement de l'alésage (94), qui sont rappelés en permanence vers une position de maintien dans laquelle, lorsqu'ils se trouvent en regard d'une gorge (G1, G2) de l'alésage, respectivement du tiroir, ils font saillie dans cette gorge.

## Claims

1. Device for controlling the hydraulic braking of a trailer coupled to a tractor, comprising a hydraulic circuit having a brake line (60) suitable for being connected to a pressurised fluid source (50) or to a receiver tank (R) with no positive pressure by means of a proportional pressure-reducing unit (62) which is electrically controlled by an electronic control unit (ECU),
**characterised in that** the circuit comprises an additional brake line (68) which is shunted with respect to said brake line (60) between an inlet tank (58) suitable for being connected to the pressurised fluid source (50) and an outlet tank (66), the brake line and the additional brake line (68) being connected to said outlet tank by means (76) for selecting the highest pressure, **in that** the circuit further comprises a hydraulic selector (70) disposed on the additional brake line (68) and solenoid valve control means (72, 74; 90) controlled by the electronic control unit (ECU), the solenoid valve control means being suitable for assuming a first operational configuration (72 at II, 74 at I, 90 at I) in which they connect the inlet tank (58) to a first control chamber (C1) of the selector (70) in order to drive said selector (70) into a first position (I) in which the input (70A) and the output (70B) of the selector (70) are insulated by the selector, a second operational configuration (72 at I, 74 at II, 90 at II) in which they connect the inlet tank (58) to a second control chamber (C2) of the selector (70) in order to drive said selector (70) into a second position (II) in which the input and output of the selector (70A, 70B) are connected together, and a neutral configuration (72 at I, 74 at I. 90 at 0) in which the input (70A) of the selector (70) is connected to said inlet tank (58) and in which neither of the two control chambers (C1, C2) is connected to the inlet tank (58), **in that** it means (96, 97, G1, G2) for holding the selector (70) in position when the valve control means (72, 74; 90) pass from their first or second operational to their configuration, and in it comprises for providing the electronic control unit (ECU) with information (IS) which whether the trailer brake is a first type (S1) requiring a brake release via a fluid supply (24) or a second type (S2, S3), the electronic control unit (ECU) taking this information into account when controlling the solenoid valve control means (72, 74; 90).

2. Device according to claim 1, **characterised in that** the selector (70) includes an auxiliary channel (70C) which is connected to the receiver tank (R), the output (70B) being connected to the auxiliary channel (70C) by being insulated from the input (70A) in the first position (1) of the selector (70), whereas the input (70A) and the output (70B) are connected by being insulated from the auxiliary channel (70C) in the second position (II) of the selector.

3. Device according to either claim 1 or 2, **characterised in that**, in the neutral configuration of the solenoid valve control means (72, 74), the two control chambers (C1, C2) of the selector (70) are substantially set to the same pressure.

4. Device according to any one of claims 1 to 3, **characterised in that** the solenoid valve control means comprise two solenoid valves with two positions (72, 74).

5. Device according to claim 4, **characterised in that** the first solenoid valve (72) has a first channel (70A) connected to the inlet tank (58), a second channel (72B) connected to the receiver tank (R), a third channel (72C) connected to the first channel (74A) of the second solenoid valve (74) and a fourth channel (72D) connected to the first control chamber (C1) of the selector (70), and **in that** the second solenoid valve (74) further comprises a second channel (74B) connected to the receiver tank (R), a third channel (74C) connected to the input (70A) of the selector (70) and a fourth channel (74D) connected to the second control chamber (C2) of the selector (70), and **in that**, on the one hand, the first and third channels (72A, 72C; 74A, 74C) and, on the other hand, the second and fourth channels (72A, 72D; 74B, 74D) of each of said solenoid valves (72, 74) are interconnected in the first positions of the solenoid valves, whereas in the second positions thereof, the first and fourth channels (72A, 72D; 74A, 74D) on the one hand and the second and third channels (72B; 72C; 74B, 74D) on the other hand of each of the solenoid valves are connected.

6. Device according to my one of claims 1 to 3, **characterised in that** the solenoid valve control means comprise a solenoid valve (90) which is capable of occupying three positions (0, I, II).

7. Device according to claim 6, **characterised in that** the solenoid valve (90) has a first channel (90A) connected to the inlet tank (58), a second channel (90B) connected to the receiver tank (R), a third channel (90C) connected to the input (70A) of the selector (70), a fourth channel (90D) connected to the first chamber (C1) of the control selector (70) and a fifth channel (90E) connected to the second control chamber (C2) of the selector (70), and **in that**, in a position 0 of the solenoid valve (90), the first and third channels (90A, 90C) are connected whilst the second channel (90B) is insulated from the fourth and fifth channels (90D, 90E) in a position I of the solenoid valve (90), the first and fourth channels (90A, 90D) are interconnected and the second and fifth channels (90B, 90D) are interconnected, whereas the third channel (90C) is insulated and, in a position II of the solenoid valve, the first and fifth channels (90A, 90E) are connected and the second and fourth channels (90B, 90D) are connected, whereas the third channel (90C) is insulated.

8. Device according to any one of claims 1 to 7, **characterised in that** the means for selecting the highest pressure comprise a shuttle valve (76) disposed at the junction between the brake line (60), the additional brake line (68) and the outlet tank (66).

9. Device according to any one claims 1 to 8, **characterised in that** the outlet tank (66) is connected to the receiver tank (R) by a pressure-relief device (78).

10. Device according to any one of claims I to 9, **characterised in that** the selector (70) comprises a slide valve (92) movable in a bore (94) and **in that** the means for holding the selector in position comprise resilient means (96, 97) fixedly connected to the slide valve or the bore (94) respectively, which are permanently directed towards a holding position in which when they are opposite a groove (G1, G2) in the bore or the slide valve respectively, they protrude into said groove.

## Patentansprüche

1. Vorrichtung zur Steuerung der hydraulischen Bremsung eines Anhängers, der an eine Zugmaschine gekuppelt ist, umfassend einen Hydraulikkreis, der eine Bremsleitung (60) aufweist, die geeignet ist, über ein Druckproportionalventil (62), das elektrisch von einer elektronischen Steuereinheit (ECU) gesteuert wird, mit einer Druckflüssigkeitsquelle (50) oder einem überdrucklosen Behälter (R) verbunden zu werden,
**dadurch gekennzeichnet, daß** der Kreis eine zusätzliche Bremsleitung (68) aufweist in Abzweigung zu der Bremsleitung (60) zwischen einem Eingangsabschnitt (58), der geeignet ist, mit der Druckwasserquelle (50) verbunden zu werden, und einem Ausgangsabschnitt (66), wobei die Bremsleitung und die zusätzliche Bremsleitung (68) über Mittel (76) zur Wahl des höchsten Drucks mit dem Ausgangsabschnitt verbunden sind, **dadurch**, daß der Kreis ferner einen hydraulischen Wähler (70) aufweist, der auf der zusätzlichen Bremsleitung (68) angeordnet ist, und Steuermagnetventilmittel (72, 74; 90), die durch die elektronische Steuereinheit (ECU) gesteuert werden, wobei die Steuermagnetventilmittel geeignet sind, eine erste Arbeitskonfiguration (72 bei II, 74 bei I, 90 bei I) anzunehmen, bei der sie den Eingangsabschnitt (58) mit einer ersten Steuerkammer (C1) des Wählers (70) verbinden, um den Letzteren in eine erste Position (1) zu steuern, in der der Eingang (70A) und der Ausgang (70B) des Wählers (70) mittels des Wählers isoliert sind, eine zweite Arbeitskonfiguration (72 bei I, 74 bei II, 90 bei II), bei der sie den Eingangsabschnitt (58) mit einer zweiten Steuerkammer (C2) des Wählers (70) verbinden, um den Letzteren in eine zweite Position (II) zu steuern, in der der Eingang und der Ausgang des Wählers (70A, 70B) miteinander verbunden sind, und eine neutrale Konfiguration (72 bei I, 74 bei I, 90 bei 0), bei der der Eingang (70A) des Wählers (70) mit dem Eingangsabschnitt (58) verbunden ist und bei der keine der beiden Steuerkammern (C1, C2) mit dem Eingangsabschnitt (58) verbunden ist, **dadurch**, daß sie Mittel (96, 97, G1, G2) aufweist, um den Wähler (70) in Position zu halten, wenn die Magnetsteuerventilmittel (72, 74; 90) von ihrer ersten oder ihrer zweiten Arbeitskonfiguration in ihre neutrale Konfiguration übergehen, und **dadurch**, daß sie Mittel aufweist, um der elektronischen Steuereinheit (ECU) eine Information (IS) zu liefern, die angibt, ob die Bremse des Anhängers von einem ersten Typ (S1) ist, der eine Antiblockierung durch eine Flüssigkeitsversorgung (24) erfordert, oder von einem zweiten Typ (S2, S3) ist, wobei die Steuereinheit (ECU) diese Information bei der Steuerung der Steuermagnetventilmittel (72, 74; 90) berücksichtigt.

2. Vorrichtung nach Anspruch 1, **dadurch gekennzeichnet, daß** der Wähler (70) einen Hilfskanal (70C) aufweist, der mit dem Behälter (R) verbunden ist, wobei in der ersten Position (I) des Wählers (70) der Ausgang (70B) mit dem Hilfskanal (70C) verbunden und von dem Eingang (70A) isoliert ist, während in der zweiten Position (II) des Wählers der Eingang (70A) und der Ausgang (70B) verbunden und von dem Hilfskanal (70C) isoliert sind.

3. Vorrichtung nach Anspruch 1 oder 2, **dadurch gekennzeichnet, daß** in der neutralen Konfiguration der Steuermagnetventilmittel (72, 74) die beiden Steuerkammern (C1, C2) im wesentlichen unter denselben Druck gesetzt sind.

4. Vorrichtung nach einem der Ansprüche 1 bis 3, **dadurch gekennzeichnet, daß** die Steuermagnetventilmittel zwei Magnetventile mit zwei Positionen (72, 74) aufweisen.

5. Vorrichtung nach Anspruch 4, **dadurch gekennzeichnet, daß** das erste Magnetventil (72) einen ersten Kanal (72A) aufweist, der mit dem Eingangsabschnitt (58) verbunden ist, einen zweiten Kanal (72B), der mit dem Behälter (R) verbunden ist, einen dritten Kanal (72C), der mit dem ersten Kanal (74A) des zweiten Magnetventils (74) verbunden ist, und einen vierten Kanal (72D), der mit der ersten Steuerkammer (C1) des Wählers (70) verbunden ist, und **dadurch**, daß das zweite Magnetventil (74) ferner einen zweiten Kanal (74B) aufweist, der mit dem Behälter (R) verbunden ist, einen dritten Kanal (74C), der mit dem Eingang (70A) des Wählers (70) verbunden ist und einen vierten Kanal (74D), der mit der zweiten Steuerkammer (C2) des Wählers (70) verbunden ist, und **dadurch**, daß der erste und der dritte Kanal (72A, 72C; 74A, 74C) einerseits und der zweite und der vierte Kanal (72B, 72D; ; 74B, 74D) andererseits jedes der Magnetventile (72, 74) untereinander in den ersten Positionen der Magnetventile verbunden sind, während in den zweiten Positionen dieser Letzteren der erste und der vierte Kanal (72A, 72D; 74A, 74D) einerseits und der zweite und der dritte Kanal (72B, 72C; 74B, 74C) andererseits jedes der Magnetventile verbunden sind.

6. Vorrichtung nach einem der Ansprüche 1 bis 3, **dadurch gekennzeichnet, daß** die Steuermagnetventilmittel ein Magnetventil (90) aufweist, das drei Positionen (0,1, II) einnehmen kann.

7. Vorrichtung nach Anspruch 6, **dadurch gekennzeichnet, daß** das Magnetventil (90) einen ersten Kanal (90A) aufweist, der mit dem Eingangsabschnitt (58) verbunden ist, einen zweiten Kanal (90B), der mit dem Behälter (R) verbunden ist, einen dritten Kanal (90C), der mit dem Eingang (70A) des Wählers (70) verbunden ist, einen vierten Kanal (90D), der mit der ersten Kammer (C1) des Steuerwählers (70) verbunden ist, und einen fünften Kanal (90E), der mit der zweiten Steuerkammer (C2) des Wählers (70) verbunden ist, und **dadurch**, daß in einer 0-Position des Magnetventils (90) der erste und der dritte Kanal (90A, 90C) verbunden sind, während der zweite Kanal (90B) von dem vierten und dem fünften Kanal (90D, 90E) isoliert ist, in einer Position I des Magnetventils (90) sind der erste und der vierte Kanal (90A, 90D) untereinander verbunden und der zweite und der fünfte Kanal (90B, 90E) sind untereinander verbunden, während der dritte Kanal (90C) isoliert ist, und in einer Position 11 des Magnetventils sind der erste und der fünfte Kanal (90A, 90E) verbunden und der zweite und der vierte Kanal (90B, 90D) sind verbunden, während der dritte Kanal (90C) isoliert ist.

8. Vorrichtung nach einem der Ansprüche 1 bis 7, **dadurch gekennzeichnet, daß** die Mittel zur Wahl des höchsten Drucks ein Wechselventil (76) aufweisen, das an der Verbindung zwischen der Bremsleitung (60), der zusätzlichen Bremsleitung (68) und dem Ausgangsabschnitt (66) angeordnet ist.

9. Vorrichtung nach einem der Ansprüche 1 bis 8, **dadurch gekennzeichnet, daß** der Ausgangsabschnitt (66) über einen Druckbegrenzer (78) mit dem Behälter (R) verbunden ist.

10. Vorrichtung nach einem der Ansprüche 1 bis 9, **dadurch gekennzeichnet, daß** der Wähler (70) einen beweglichen Schieber (92) in einer Bohrung (94) aufweist und daß die Mittel, um den Wähler in Position zu halten, elastische Mittel (96, 97) aufweisen, die mit dem Schieber beziehungsweise mit der Bohrung (94) fest verbunden sind, die ständig wieder in eine Halteposition zurückgeholt werden, in der sie, wenn sie sich gegenüber einer Aushöhlung (G1, G2) der Bohrung beziehungsweise der Schiebers befinden, in dieser Aushöhlung hervorstehen.
